# EUROPEAN PATENT SPECIFICATION

(11) **EP 1 347 111 B1**
(45) Date of publication and mention of the grant of the patent: **05.08.2009**
(21) Application number: 02425185.2
(22) Date of filing: 22.03.2002
(51) Int. Cl.: E04C 2/292, E04C 2/34, B29C 44/32

(54) **Reinforced panel for sectional doors, process and apparatus for manufacturing thereof**
Verstärktes Paneel für Sektionaltore, Verfahren und Vorrichtung zur Herstellung
Panneau renforcé pour porte sectionnelle, son procédé de fabrication et appareil pour la mise en oeuvre de ce procédé

(43) Date of publication of application: 24.09.2003
(73) Proprietor: METECNO Industrie S.p.A.., 20100 Milano (IT)
(72) Inventor: Morandi, Maurizio, c/o Bremet Brevetti Metecno SPA, 33097 Spilimbergo Pordenone (IT); Garassino, Piero, c/o Bremet Brevetti Metecno SPA, 33097 Spilimbergo Pordenone (IT)
(74) Representative: Schiuma, Daniele Wolfgang

(56) References cited:
- EP-A- 0 110 265
- DE-A- 4 327 503
- GB-A- 1 369 641
- US-A- 4 593 449
- US-A- 4 995 441

## Description

The invention relates generally to the sector of composite panels of the type commonly used to build walls, doors, roofing, cladding or the like in civil, industrial and other kinds of constructions.

The composite structure of these panels, which is also referred to as "sandwich", includes at least one central insulating layer or core arranged between two walls which define the outer faces at sight of the panel; these outer faces are usually made of sheet metal, while the insulating material is generally an expanded material such as polyurethane foam, or a rock wool.

An important aspect concerning the performance of these panels is their mechanical strength in relation to their weight: indeed they must be preferably strong and light in order to fullfil the requirements of the various types of constructions mentioned above.

Usually, in order to increase the strength of the panels it is known to provide their outer faces with deep profiling, so as to increase the flexural rigidity thereof as well as that of the entire composite structure.

This solution is satisfactory from the mechanical point of view, but it is not suitable for those panels which, for any reason, cannot have deeply profiled external faces.

This is for example the case of panels for sectional doors, namely those doors consisting of panels hinged together horizontally and slidable in a vertical direction like a rolling shutter, along guides provided as a fixture in the walls.

These doors are nowadays frequently used to close domestic garages, warehouses or other civil and industrial buildings, and the panels which form them are mainly smooth except for slight ribbing with stiffening function.

This allows the doors to be adapted more easily to the environment wherein they are installed, also from an aesthetic point of view; reference can be made, for example, to a garage door which must fit the appearance and the style of the facade of a house.

It must also be remembered that often the panels of sectional doors are finished externally with elements such as mouldings, veneer and the like, which require an essentially flat surface for application thereof.

From the point of view of the mechanical strength, the behaviour of externally smooth panels is inferior to that of the profiled panels mentioned further above; the result, therefore, is that problems may arise especially in the case of large-size sectional doors.

The latter must indeed be extremely light, in order to facilitate raising and lowering thereof during the opening and closing operations; however, if for lightening the doors the thickness of the insulating layer or that of the sheet metal of the panels is reduced, also the mechanical strength thereof diminishes so that they may be deformed by the stresses to which they are exposed during use.

In this connection it must be considered that, differently from the panels for other applications referred to above, the panels of sectional doors do not operate in static conditions since their position changes from vertical to horizontal, depending on whether the doors are closed or open.

Indeed, when the sectional doors are closed the panels remain aligned vertically so that each of them is subject essentially to buckeling, because of the weight of the panels situated above in said alignment and, in certain cases, of the pressure exerted by the wind which may bend the panels.

When the sectional doors are open, on the other hand, the uppermost panels slide along the higher part of the guides which is substantially horizontal: consequently, in this condition the panels having a wide span may bend under their weight, since they rest only at their ends on the sliding guides.

This bending may with time cause damage to the panels or give rise to incorrect functioning of the sectional doors.

The present invention aims to remedy this state of the art.

GB 1 369 641 relates to a method for the fabrication of self-supporting insulating panels covered on at least one side with a covering foil, and with an insulating core of hard plastics foam interposed between the covering foil and a reinforcing element, wherein the covering foil and the reinforcing element being advanced together with the foam at the speed corresponding to the reaction speed of the reaction components.

EP 0 110 265 relates to a process for continuously producing sandwich panels rimmed along the longitudinal edges, wherein first and second bands of profiled sheets are continuously advanced and approach to each other as they advance to a predetermined distance from each other, wherein between the two approaching bands a chemical product is introduced and then expanded.

Thus, according to an aspect, it is a problem to provide a composite structure panel which comprises a sufficient strength in order to prevent the penetration of objects or persons in an attempt to break through or destroy the panels and, on the other hand, has an advantageous flexural behaviour so as to bend to a specific side.

This problem is fulfilled by a composite structure panel having the features disclosed in claim 1. Preferred embodiments are defined in the dependent claims.

In particular, the invention relates to panels whose outer faces are mainly flat, like it occurs usually in the panels of sectional doors.

The aforementioned object is achieved by a panel reinforced with elements arranged in the layer of insulating material; these elements are preferably profiled elements which may be formed and applied to the panels during the continuous production cycle thereof.

For this purpose the invention also provides a method and an apparatus for the continuous production of the aforesaid panel.

The features of the latter, of the method and apparatus for the continuous manufacturing thereof are specifically recited in the claims which will follow.

The invention as a whole will be better understood in the light of the description provided hereinbelow, relating to a non-limiting embodiment thereof, illustrated in the accompanying drawings wherein:

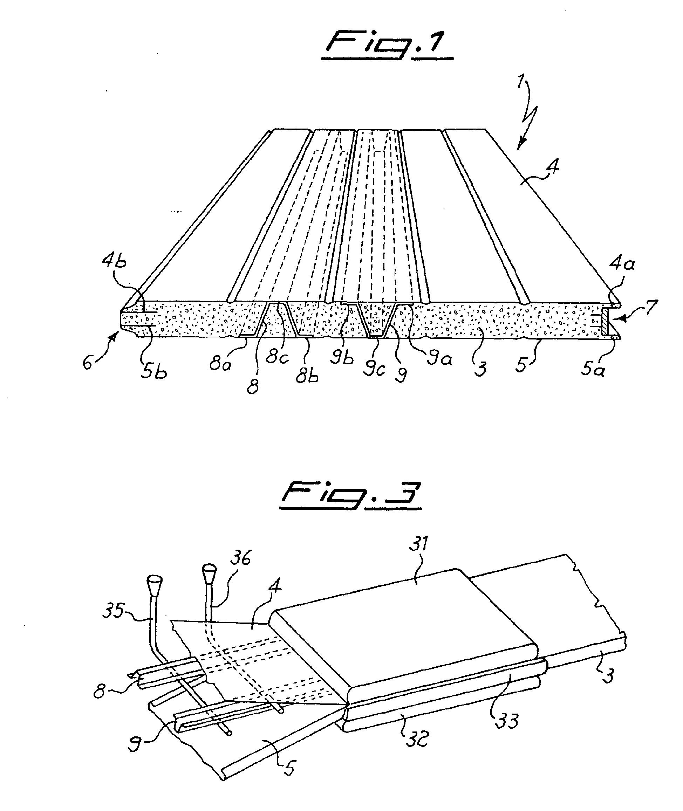

- Fig. 1 shows a longitudinal section of a panel according to a comparative example;
- Fig. 2 shows diagrammatically a plant for the continuous production of panels according to the invention;
- Fig. 3 shows a detail of the plant of the preceding figure;
- Fig. 4 is a sectional view along the line IV-IV in Fig. 2;
- Figs. 5 shows a further comparative example, and Fig 6 shows respective variants of the panel according to the invention.

With reference to the drawings, numeral 1 denotes a panel for sectional doors, made in accordance with the invention.

This panel has a composite structure comprising a layer of insulating material 3, consisting in this case of polyurethane foam, arranged between two faces 4 and 5 made of sheet metal; the latter have respective edges 4a, 4b, 5a, 5b which are folded towards the inside of the panel, so as to define a male profile 6 and a female profile 7 intended to mate with similar profiles of adjacent panels (not shown in the drawings) of the sectional door.

The structure of the panel 1 according to the comparative example is stiffened by two reinforcing elements 8, 9 which in this case are formed by two profiled elements made of sheet metal similar to that of the sides 4 and 5, to which they are secured by means of gluing of their respective horizontal portions 8a, 8b, 8c and 9a, 9b, 9c.

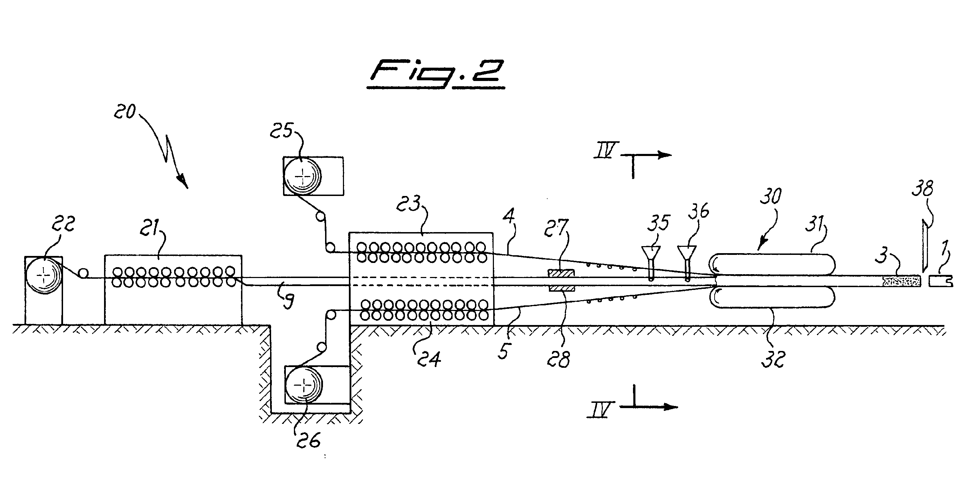

The panel 1 made accordingly may be continuously produced by means of a plant 20, such as shown in Fig. 2.

This plant comprises a first profiling device 21 supplied by a reel 22 of strip metal, intended for forming the two profiled elements 8, 9; downstream thereof two profiling devices 23, 24 are located, respectively above and below the horizontal adancing path of the profiled elements 8 and 9, which form the outer walls 4 and 5 of the panels from corresponding reels 25, 26 of flat strip metal.

Subsequently, along the travel path of the profiled elements 8 and 9, glue is applied along the horizontal portions 8a-8c, 9a-9c of said elements by means of pads 27, 28.

At this point the strips of the walls 4 and 5 converge towards the profiled elements 8 and 9, to which they are fixed as a result of the compression exerted by a continuous press 30.

The latter is known per se and comprises four continuous belts, an upper belt 31, a lower belt 32 and two side belts 33 (in the drawings only one of them is shown), which define a parallelepiped volume where the strips 4 and 5 adhere to the portions 8a-8c, 9a-9c of the profiled elements and where expansion of the polyurethane occurs, producing the foam that builds up the insulating layer 3 of the panels.

For this reason, upstream of the continuous press 30, nozzles in the form of bars 35, 36 are provided, which deposit the polyurethane from above onto the advancing bottom strip 5, thereby forming thereon longitudinal parallel strips 37; the arrangement of the nozzles 35 and 36 respectively below and above the profiled elements 8 and 9, allows the expanding material to be sprayed also in the region of said elements.

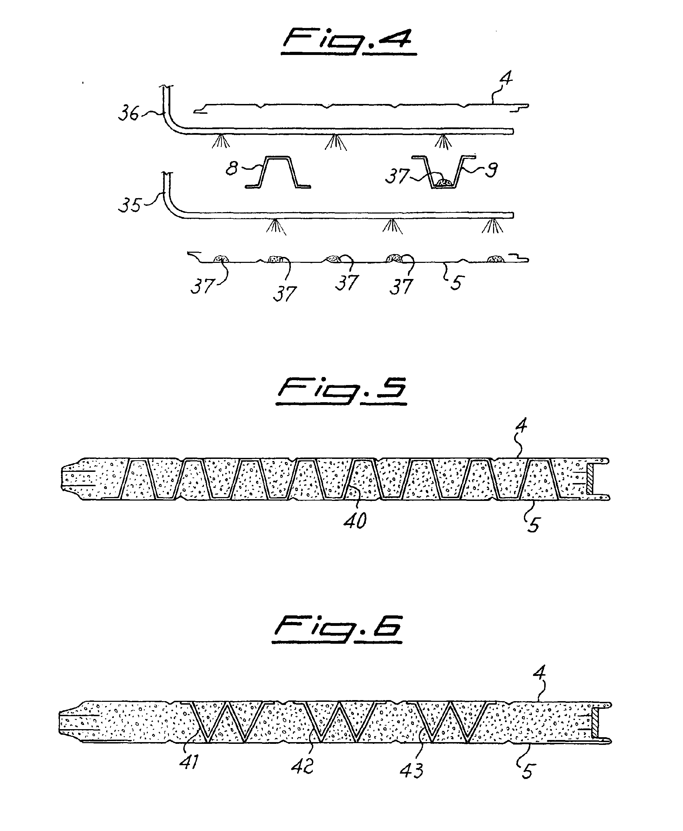

Indeed, the nozzle (cf Fig. 4) supplies material onto the zone of the strip 5 located underneath the profiled element 8, while the nozzle 36 sprays it from above into the concavity of the profiled element 9; in this way it is possible to ensure a uniform distribution of the polyurethane and therefore of the foam resulting therefrom, also inside the profiled elements.

At the outlet of the press 30 there is thus a continuous semi-finished product, which a flying shear 38 cuts transversely into finished panels 1 of the desired length.

As mentioned farther above, the latter have excellent mechanical properties owing to the presence inside them of the profiled elements 8 and 9, which impart a high flexural rigidity to the composite ("sandwich") structure of said panel that therefore is not deformed by the weight, even in the case of large-span panels.

This important result is obtained with a negligible overall increase in the weight of the panel.

Indeed, the slight increase due to the profiled elements 8 and 9, which are be made of sheet metal with a thickness less than or equal to that of the walls of the panel, is associated with a much greater increase in the rigidity of the latter resulting from the deep ribbing of the profiled elements (i.e. having a high moment of inertia of the cross-section, proportional to the fourth power of its height).

Another important effect achieved by the panels according to the invention consists in the fact that their structure makes them intrusion-proof, since the reinforcing elements (i.e. the profiled elements 8 and 9) prevent the penetration of objects or persons in the event of an attempt to break through or destroy the panels.

In this connection it should be just considered that the distance between the profiled elements 8 and 9 may be smaller than that shown in the drawings, thereby preventing the passage through the panels of objects with predefined dimensions, as prescribed by anti-crime security regulations.

It is obvious, however, that the number of reinforcing elements arranged inside the panel may be greater (or less) than the two profiled elements 8 and 9; this will depend on various factors such as, for example, the required degree of strength of the panels to be obtained, their dimensions and other factors.

In these circumstances the manufacturing method described above may be equally well carried out, it being sufficient to have profiling devices suitable for making a greater number of reinforcing elements; the latter, if necessary, could be incorporated in a single corrugated metal sheet 40, as shown in Figure 5.

According to the invention, the shape of the profile of the reinforcing elements is formed as it can be seen in Fig. 6 where the profiled elements 41-43 have a W-shaped cross-section and are attached only to the upper side 4 of the panel, along respective horizontal portions.

It is easy to understand that according to the invention, the flexural behaviour of the panel with respect to a middle axis extending between its shaped edges 6 and 7, is not symmetrical as regards bending thereof upwards or downwards.

By way of a further modification with respect to what's been mentioned hitherto, it should be pointed out that it is possible to provide openings in the various reinforcing elements (profiled elements, sheet metal or the like) of the panel in order to favour the homogeneous expansion of the foam; it should be noted that these openings may be easily provided (for example by means of punching) on the initial strip when it is still flat, before being shaped to obtain the profiled elements in the plant of Figure 2.

More generally it may be stated that all of these variants depend on many factors including, for example, the fact that it is required to obtain a panel suitable for particular stresses, the materials used for the manufacture thereof, the profile of the outer faces of the panel and any ribs present thereon, etc.

Fixing of the reinforcing elements to the faces of the panels may be performed in various ways, in addition to gluing thereof as in the example considered; for instance it is possible to apply a bi-adhesive tape to these elements (i.e. the profiled elements 8, 9, 41-43, the corrugated sheet metal 40, etc.) or to the sheet metal of the faces 4 and 5, which allows joining their surfaces following the squeezing carried out by the press 30, owing to the tape adhesiveness on both sides.

However, in these cases the thickness of the reinforcing elements, be they profiled elements or corrugate sheet metal, will always be substantially the same as the thickness of the insulating layer of the panels.

Last, it must be pointed out how the panels manufacturing method and the associated plant 20 considered above, in which the profiled elements 8 and 9 advance in a single rectilinear direction from the profiling device 21 to the press 30, avoid deviations in the travel path of the profiled elements which would otherwise be problematic, owing to the difficulty in bending thereof.

Indeed the configuration of these profiled elements and more generally that of the various reinforcing elements considered above, is not suitable for allowing bending thereof at an angle of about 5°-10° likewise the angle of inclination (relative to the horizontal) of the strip sections 4 and 5 comprised between the respective profiling devices 23, 24 and the continuous press 30.

## Claims

1. Composite structure panel comprising at least one insulating layer (3) arranged between outer faces (4, 5) made of sheet metal and having a pair of edges (6, 7) on opposite sides, shaped for mating with other panels, and a plurality of reinforcing elements (41, 42, 43) arranged in the insulating layer (3) in a direction parallel to the shaped edges (6, 7), having substantially the same height as the thickness of the insulating layer (3),
**characterized in that**
the reinforcing elements (41, 42, 43) have a W-shaped cross-section and are attached only to the upper side (4) of the panel along respective horizontal portions.

2. Panel according to Claim 1, wherein the outer faces (4, 5) are substantially flat.

3. Panel according to Claims 1 or 2, wherein said reinforcing element (40-43) has portions parallel to the outer faces (4, 5) to which it is fixed by means of glue or a bi-adhesive strip.

4. Panel according to Claim 3, wherein said profiled reinforcing element (40-43) has openings for receiving the material of the insulating layer (3).

5. Panel according to Claim 4, wherein the insulating layer (3) is formed by expanded polymer material.

6. Panel according to any one of the preceding claims, wherein said reinforcing element comprises a metal profiled element (41-43) with a substantially open cross-section.

7. Panel according to any one of Claims 1 to 5, wherein said reinforcing element comprises a corrugated sheet metal.

8. Sectional door comprising a plurality of panels in accordance with any of the preceding claims.

9. Method for continuously producing panels according to any one of Claims 1 to 7, comprising the steps of:
- providing at least one continuous profiled element advancing in a rectilinear direction;
- causing an upper metal strip (4) and a lower metal strip (5) to converge towards said profiled element, respectively from the top and from the bottom with reference thereto;
- applying expansion insulating material between the strips and pressing the latter against each other, keeping them in a condition parallel to the profiled element, thereby obtaining a continuous semifinished product with a composite structure;
- cutting the semifinished product so as to form the panels.

10. Method according to Claim 9, wherein the continuous profiled element has portions parallel to the strips (4, 5) when they are pressed towards one another, where fixing means are applied.

11. Method according to Claim 10, wherein the fixing means comprise one or more of the following: glue, bi-adhesive tape.

12. Method according to any one of Claims 9-11, wherein the expansion insulating material is also applied inside the continuous profiled element.

13. Method according to Claim 12, wherein said continuous profiled element has openings for expansion insulating material passing therethrough.

## Patentansprüche

1. Verbundstrukturplatte bzw. -paneel, umfassend zumindest eine Isolierschicht (3), die zwischen äußeren Flächen (4, 5) aus Blech angeordnet ist und ein Paar Ränder bzw. Kanten (6, 7) auf gegenüberliegenden bzw. entgegengesetzten Seiten aufweist, die zum Zusammen- bzw. Aneinanderpassen mit anderen Platten bzw. Paneelen geformt ist, und eine Mehrzahl von Verstärkungselementen (41, 42, 43), die in der Isolierschicht (3) in einer Richtung parallel zu den geformten Rändern bzw. Kanten (6, 7) angeordnet ist und im Wesentlichen die gleiche Höhe wie die Dicke der Isolierschicht (3) aufweist,
**dadurch gekennzeichnet, dass**
die Verstärkungselemente (41, 42, 43) einen W-förmigen Querschnitt aufweisen und nur an der oberen Seite (4) der Platte entlang jeweiliger horizontaler Abschnitte angebracht sind.

2. Platte nach Anspruch 1, wobei die äußeren Flächen (4, 5) im Wesentlichen flach sind.

3. Platte nach Anspruch 1 oder 2, wobei das Verstärkungselement (40-43) Abschnitte parallel zu den äußeren Flächen (4, 5) aufweist, an denen es mittels Klebstoff oder eines doppelseitig haftenden Streifens fixiert bzw. befestigt ist.

4. Platte nach Anspruch 3, wobei das profilierte Verstärkungselement (40-43) Öffnungen zum Aufnehmen des Materials der Isolierschicht (3) aufweist.

5. Platte nach Anspruch 4, wobei die Isolierschicht (3) durch aufgeschäumtes bzw. ausgedehntes Polymermaterial gebildet ist.

6. Platte nach einem der vorhergehenden Ansprüche, wobei das Verstärkungselement ein metallisches profiliertes Element (41-43) mit einem im Wesentlichen offenen Querschnitt umfasst.

7. Platte nach einem der Ansprüche 1 bis 5, wobei das Verstärkungselement ein gewelltes Blech umfasst.

8. Sektionaltor, umfassend eine Mehrzahl von Platten bzw. Paneelen nach einem der vorhergehenden Ansprüche.

9. Verfahren zum kontinuierlichen Herstellen von Platten bzw. Paneelen nach einem der Ansprüche 1 bis 7, umfassend die Schritte:
- Bereitstellen von zumindest einem kontinuierlichen bzw. durchgängigen profilierten Element, das in einer geradlinigen Richtung vorläuft bzw. vorrückt;
- Bewirken, dass ein oberer Metallstreifen (4) und ein unterer Metallstreifen (5) zu dem profilierten Element hin konvergieren bzw. zusammenlaufen, und zwar von oben bzw. unten bezüglich desselben;
- Einbringen von Ausdehnungs- bzw. Aufschäumungsisoliermaterial zwischen den Streifen und Gegeneinanderdrücken der letzteren, wobei diese in einem Zustand parallel zu dem profilierten Element gehalten werden, wodurch ein kontinuierliches bzw. durchgängiges Halbzeug mit Verbundstruktur erhalten wird;
- Schneiden des Halbzeugs, um die Platten zu bilden.

10. Verfahren nach Anspruch 9, wobei das kontinuierliche profilierte Element Abschnitte parallel zu den Streifen (4, 5) aufweist, wenn diese zueinander hingedrückt werden, wo bzw. an denen Fixier- bzw. Befestigungsmittel angebracht werden.

11. Verfahren nach Anspruch 10, wobei die Fixiermittel eines oder mehrere der Folgenden umfassen: Klebstoff, doppelseitig haftendes Klebeband.

12. Verfahren nach einem der Ansprüche 9 bis 11, wobei das Ausdehnungs- bzw. Aufschäumungsisoliermaterial ebenfalls in das kontinuierliche profilierte Element eingebracht wird.

13. Verfahren nach Anspruch 12, wobei das kontinuierliche profilierte Element Öffnungen für das Ausdehnungs- bzw. Aufschäumungsisoliermaterial aufweist, das durch diese tritt bzw. verläuft.

## Revendications

1. Panneau à structure composite comprenant au moins une couche isolante (3) disposée entre des faces extérieures (4, 5) qui sont constituées de feuillard en métal et qui ont une paire de bordures (6, 7) sur des côtés opposés, façonnées pour être accouplées avec d'autres panneaux, et une pluralité d'éléments de renforcement (41, 42, 43) agencés dans la couche isolante (3) dans une direction parallèle aux bordures façonnées (6, 7), ayant sensiblement la même hauteur que l'épaisseur de la couche isolante (3),
**caractérisé en ce que**
les éléments de renforcement (41, 42, 43) ont une section transversale en forme de « W » et **en ce qu'**ils sont fixés seulement à la face supérieure (4) du panneau le long des parties horizontales respectives.

2. Panneau conformément à la revendication 1, dans lequel les faces extérieures (4, 5) sont sensiblement planes.

3. Panneau conformément à l'une ou l'autre des revendications 1 et 2, dans lequel ledit élément de renforcement (40 - 43) a des parties parallèles aux faces extérieures (4, 5) auxquelles il est fixé au moyen de colle ou d'une bande bi-adhésive.

4. Panneau conformément à la revendication 3, dans lequel ledit élément de renforcement (40 - 43) a des ouvertures pour réceptionner le matériau de la couche isolante (3).

5. Panneau conformément à la revendication 4, dans lequel la couche isolante (3) est formée par du matériau en polymère expansé.

6. Panneau conformément à l'une quelconque des revendications précédentes, dans lequel ledit élément de renforcement comprend un élément profilé en métal (41 - 43) avec une section transversale sensiblement ouverte.

7. Panneau conformément à l'une quelconque des revendications 1 à 5, dans lequel ledit élément de renforcement comprend un feuillard en métal cranté.

8. Porte sectionnelle comprenant une pluralité de panneaux en conformité avec l'une quelconque des revendications précédentes.

9. Procédé pour la production en continu de panneaux conformément à l'une quelconque des revendications 1 à 7, comprenant les étapes consistant à :
- fournir au moins un élément profilé continu qui avance dans une direction rectiligne ;
- provoquer qu'une bande de métal supérieure (4) et qu'une bande de métal inférieure (5) convergent vers ledit élément profilé, respectivement depuis le haut et depuis le bas en référence à ceux-ci ;
- appliquer un matériau isolant à expansion entre les bandes et presser ces dernières l'une contre l'autre, les garder dans un état parallèle à l'élément profilé, obtenant de cette manière un produit continu semi-fini qui présente une structure composite ;
- couper le produit semi-fini de manière à former les panneaux.

10. Procédé conformément à la revendication 9, dans lequel l'élément profilé continu a des parties parallèles aux bandes (4, 5) lorsqu'elles sont pressées l'une vers l'autre, là où des moyens de fixation sont appliqués.

11. Procédé conformément à la revendication 10, dans lequel les moyens de fixation comprennent un ou plusieurs composants parmi les suivants : colle, bande bi-adhésive.

12. Procédé conformément à l'une quelconque des revendications 9 à 11, dans lequel le matériau isolant à expansion est aussi appliqué à l'intérieur de l'élément profilé continu.

13. Procédé conformément à la revendication 12, dans lequel ledit élément profilé continu a des ouvertures pour que le matériau isolant à expansion passe à travers celles-ci.
